# EUROPÄISCHE PATENTSCHRIFT

(11) **EP 2 226 434 B1**
(45) Veröffentlichungstag und Bekanntmachung des Hinweises auf die Patenterteilung: **08.02.2012**
(21) Anmeldenummer: 09003073.5
(22) Anmeldetag: 04.03.2009
(51) Int. Cl.: E03C 1/04, F16K 31/60, F16K 35/02

(54) **Sanitärarmatur mit Begrenzung des Wasserdurchflusses**
Sanitary fitting with water flow limiter
Armature sanitaire dotée d'une limitation du débit d'eau

(43) Veröffentlichungstag der Anmeldung: 08.09.2010
(73) Patentinhaber: KWC AG, 5726 Unterkulm (CH)
(72) Erfinder: Lehner, Michael, 5722 Gränichen/AG (CH); Keller, Susanne, 5315 Böttstein/AG (CH)
(74) Vertreter: Schaad, Balass, Menzl & Partner AG

(56) Entgegenhaltungen:
- EP-A1- 0 643 246
- EP-A2- 0 140 275
- EP-B1- 0 426 639
- GB-A- 2 144 521
- US-A- 5 363 880

## Beschreibung

Die vorliegende Erfindung betrifft eine Sanitärarmatur gemäss dem Oberbegriff des Patentanspruchs 1.

Eine Sanitärarmatur dieser Art ist aus EP 1 450 088 A bekannt. An einem Steuerarm einer in einer Ausnehmung eines Armaturengehäuses angeordneten Kartusche ist eine Kappe befestigt, von welcher, mit dieser einstückig ausgebildet, ein S-förmiger Betätigungshebel absteht. Dieser weist ein Gelenk auf, so dass der freie Endabschnitt des Betätigungshebels einen Hilfshebel bildet, an welchem eine Stellschraube angeordnet ist. Wird in Ausschaltstellung des Betätigungshebels der Hilfshebel verschwenkt, kommt die Stellschraube am Armaturengehäuse zur Anlage, wodurch die Kappe und somit der Steuerarm der Kartusche in eine Sparstellung verschwenkt wird. Durch Betätigen des bezüglich des Gelenks der Kappe zugewandten Teils des Betätigungshebels lässt sich der Steuerarm der Kartusche von der Sparstellung und von der Ausschaltstellung direkt in die Maximalstellung schwenken um den maximalen Wasserdurchfluss einzustellen.

Eine weitere derartige Sanitärarmatur ist aus EP 1 055 781 A bekannt. Auch hier ist eine Kappe mit einem von dieser abstehenden Betätigungshebel am Steuerarm einer Kartusche befestigt, welche in einer Ausnehmung des Armaturengehäuses angeordnet ist. Die Kappe ist von einem Hilfshebel durchgriffen, welcher zur Begrenzung der Schwenkbewegung in die Sparstellung an den Betätigungshebel heranzuziehen ist. Dabei stützt sich der Hilfshebel, in Sparstellung, an einer Oberkante eines Abdeckrings der Kartusche ab. Durch Freigabe des Hilfshebels kann der Betätigungshebel in die Maximalstellung verschwenkt werden.

Die EP 0 140 275 A2 offenbart eine Handhebelbetätigungsvorrichtung für Eingriffmischventile mit einem in zwei Freiheitsgraden bewegbaren Ventilglied zur separaten Bestimmung des Mischungsverhältnisses und der Gesamtdurchflussmenge. Der mit dem Ventilglied verbundene, um zwei senkrecht zueinander im Ventilgehäuse angeordnete Drehachsen verschwenkbare Handhebel ist seitlich aus dem Mantel eines um die erste Drehachse drehbaren, auf dem Ventilgehäuse gehalterten Hebelkopfgehäuses, herausgeführt. Der Handhebel ist im Innern des Hebelkopfgehäuses mit einem Hebelarm und einer Stellschraube versehen. Mit Hilfe der Stellschraube kann der Schwenkbereich um die zweite Drehachse und damit die maximale Durchlaufmenge durch das Ventil reduziert werden.

Es ist eine Aufgabe der vorliegenden Erfindung, eine gattungsgemässe Sanitärarmatur zu schaffen, welche benutzerfreundlich einfach und sicher bedienbar ist.

Diese Aufgabe wird mit einer Sanitärarmatur gelöst, welche die Merkmale des Patentanspruchs 1 aufweist.

Erfindungsgemäss ist eine, eine Kartusche und eine Ausnehmung eines Armaturengehäuses, in welcher die Kartusche angeordnet ist, überdeckende Kappe am Armaturengehäuse derart angeordnet beziehungsweise gelagert, dass sie um die Drehachse der Kartusche drehbar, jedoch nicht um eine zur Drehachse rechwinklig verlaufende Schwenkachse schwenkbar ist. Ein Betätigungshebel zum Betätigen des Steuerarms der Kartusche ist an diesem Steuerarm angeordnet und ist durch einen Durchlass der Kappe hindurch geführt. Der über die Kappe vorstehende Teil des Betätigungshebels kann somit von der die Armatur benutzenden Person betätigt werden. Der Durchlass ist langlochartig ausgebildet und weist eine, einer Sparstellung zugeordnete, Stufe auf. Befindet sich der Betätigungshebel in einer Begrenzungsstellung, ist seine Schwenkbewegung, ausgehend von einer Ausschaltstellung, in welcher die Kartusche den Durchfluss von Wasser durch die Sanitärarmatur unterbindet, in Richtung gegen eine Maximalstellung, in welcher die Kartusche den maximalen Wasserdurchfluss ermöglicht, in einer Sparstellung begrenzt. Diese ist durch die Stufe des Durchlasses vorgegeben, wobei in Sparstellung des Betätigungshebels der wasserdurchfluss gegenüber dem maximalen Wasserdurchfluss geringer ist; beispielsweise beträgt der Wasserdurchfluss in Sparstellung etwa 30 - 40 % des maximalen Wasserdurchflusses. Wird hingegen der Betätigungshebel in seine Freigabestellung verbracht, ist seine Schwenkbewegung in Richtung zur Maximalstellung frei.

In bevorzugter Weise ist der Betätigungshebel mit einer in Richtung gegen die Begrenzungsstellung wirkenden Kraft beaufschlagt, so dass er nur durch Überwinden dieser Kraft durch die die Armatur benutzende Person in die Freigabestellung verbringbar ist. Die Sparstellung ist somit nur überwindbar, wenn der Betätigungshebel bewusst in die Freigabestellung verbracht wird.

Da die Kappe um die Drehachse drehbar am Armaturengehäuse gelagert ist, kann diese beim Drehen des Betätigungshebels um die Drehachse zum Einstellen der Wassertemperatur mitdrehen.

In bevorzugter Weise verläuft die Längsrichtung des langlochartigen Durchlasses in einer Ebene, in welcher die Drehachse liegt.

In bevorzugter Weise ist der Betätigungshebel aus seiner Begrenzungsstellung in die Freigabestellung durch Ziehen, bezüglich der Drehachse in einer Richtung radial gegen aussen, verbringbar. Es ist jedoch auch denkbar, den Betätigungshebel derart auszubilden, dass er durch Drehen um seine Achse oder durch Drücken, in radialer Richtung auf die Drehachse zu, von der Begrenzungsstellung in die Freigabestellung verbracht wird.

Besonders bevorzugte Ausführungsformen der erfindungsgemässen Sanitärarmatur sind in den abhängigen Patentansprüchen angegeben.

Es zeigen rein schematisch:
- Fig. 1: eine Ansicht auf eine Sanitärarmatur, die ein Armaturengehäuse, eine Kappe mit einem Durchlass und einen, sich in einer Ausschaltstellung befindenden Betätigungshebel aufweist;
- Fig. 2: einen Längsschnitt entlang der Linie II - II durch die in Fig. 1 dargestellte Sanitärarmatur, mit einer Kartusche, die einen Steuerarm aufweist, an dem der, sich in der Ausschaltstellung befindende Betätigungshebel befestigt ist;
- Fig. 3: einen Längsschnitt durch den, sich in einer ersten Endlage befindenden Betätigungshebel;
- Fig. 4: einen Längsschnitt durch den, sich in einer zweiten Endlage befindenden Betätigungshebel;
- Fig. 5: eine perspektivische Explosionszeichnung des Betätigungshebels;
- Fig. 6: eine Ansicht auf die Sanitärarmatur aus Fig. 1, mit dem in eine Sparstellung verschwenkten Betätigungshebel;
- Fig. 7: einen Längsschnitt entlang der Linie II - II durch die in Fig. 6 dargestellte Sanitärarmatur;
- Fig. 8: eine Ansicht auf die Sanitärarmatur aus Fig. 1, mit dem in eine Maximalstellung verschwenkten Betätigungshebel; und
- Fig. 9: einen Längsschnitt entlang der Linie II - II durch die in Fig. 8 dargestellte Sanitärarmatur.

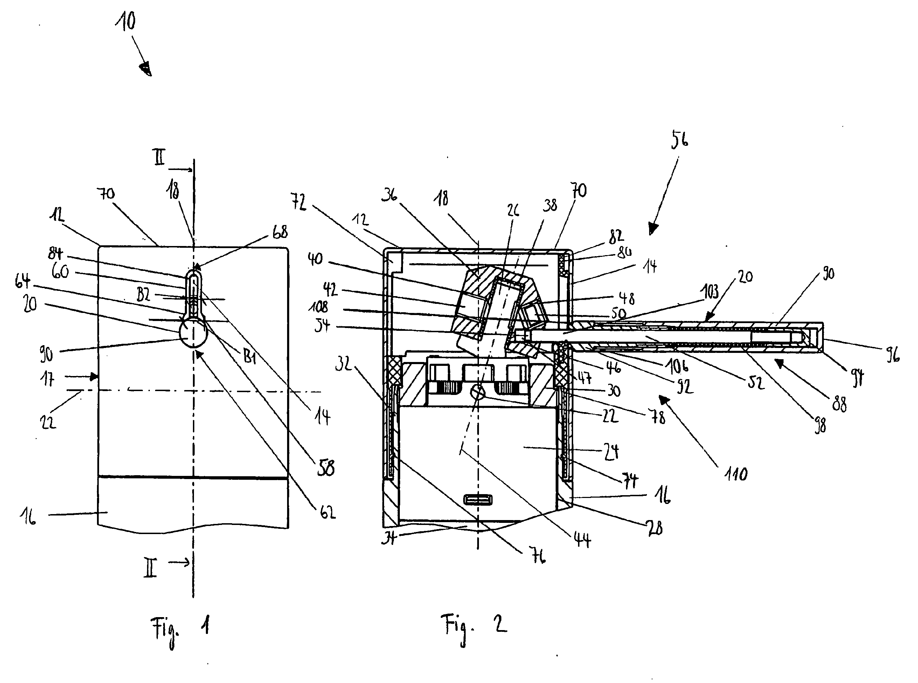

Fig. 1 zeigt in Ansicht einen oberen Teil einer Sanitärarmatur 10, die eine Kappe 12 mit einem Durchlass 14, der langlochartig ausgebildet ist, und ein Armaturengehäuse 16 aufweist, welches in bekannter Art und Weise an einer Auflage, beispielsweise an einem Waschtisch, befestigt ist. Die Kappe 12 weist einen kreiszylinderförmigen Mantelabschnitt 17 auf, in welchem der langlochartige Durchlass 14 angeordnet ist, wobei die Längsachse des Durchlasses 14 in einer Ebene mit einer Drehachse 18, die durch das Armaturengehäuse 16 definiert ist und zentral durch die Sanitärarmatur 10 hindurch verläuft, liegt. Durch den Durchlass 14 hindurch, ungefähr rechtwinklig zur Drehachse 18, tritt ein Betätigungshebel 20 aus dem Innern der Kappe 12 heraus. Die Kappe 12 ist um eine Längsachse d.h. um die Drehachse 18 drehbar am Armaturengehäuse 16 gelagert. Die Kappe 12 kann mit dem Betätigungshebel 20 mitdrehen und der Betätigungshebel 20 kann zusätzlich, begrenzt durch den langlochartigen Durchlass 14, um eine Schwenkachse 22 geschwenkt werden.

Fig.2 zeigt einen Längsschnitt durch die Sanitärarmatur 10. Im Innern des Armaturengehäuses 16 ist eine Kartusche 24, die einen Steuerarm 26 aufweist, angeordnet. Der Steuerarm 26 ist, in bekannter Art und weise um seine, mit der Drehachse 18 zusammenfallende Drehachse drehbar und um die zu dieser rechtwinklig verlaufenden Schwenkachse 22 schwenkbar, in der Kartusche 24 gelagert. Mittels des Betätigungshebels 20 bzw. eine, den Betätigungshebel 20 bedienende Person, kann der Steuerarm 26, zum Einstellen der Wassertemperatur, um die Drehachse 18 gedreht oder, zum Einstellen der Wassermenge, um die Schwenkachse 22 geschwenkt werden.

Die Kartusche 24 ist, wie allgemein bekannt, in einer Ausnehmung 28 im Armaturengehäuse 16 angeordnet und mittels eines eingeschraubten Halterings 30, der ein Aussengewinde aufweist und auf einen vorstehenden Abschnitt 32 des Armaturengehäuses 16, der ein Innengewinde aufweist, aufgeschraubt, und somit fest mit einem Zwischenboden 34 verspannt.

Zur Zuführung von Warm- und Kaltwasser zur Kartusche 24 und zur Wegleitung des Mischwassers von der Kartusche 24 zu einem nicht gezeigten Auslassrohr der Sanitärarmatur 10, weisen der Zwischenboden 34 und der Boden der Kartusche 24, in bekannter Art und Weise die entsprechenden Öffnungen auf.

Ein Befestigungskörper 36, der eine Ausnehmung aufweist, ist im Innern der Kappe 12 an einem freien Endabschnitt des Steuerarms 26 angeordnet. Zwischen dem Befestigungskörper 36 und dem Steuerarm 26 befindet sich eine elektrisch isolierende Hülse 38, die eine galvanische Verbindung zwischen dem Steuerarm 26 und dem Befestigungskörper 36 verhindert. Der Befestigungskörper 36 ist mittels einer, in einer ersten Gewindebohrung 40 eingeschraubten, ersten Madenschraube 42, insbesondere ein Gewindestift mit einem Innensechskant, am Steuerarm 26 festgeklemmt, wobei die erste Gewindebohrung 40 auf der dem Durchlass 14 abgewandten Seite ausgebildet ist. Die erste Gewindebohrung 40 ist radial rechtwinklig zu einer Längsachse 44 des Steuerarms 26 angeordnet. Auf der, der ersten Gewindebohrung 40 gegenüberliegenden Seite des Befestigungsköpers 36, weist dieser eine Sacklochbohrung 46 auf. Die Sacklochbohrung 46 dient dazu, einen Befestigungsabschnitt 47 des Betätigungshebels 20 aufzunehmen. Zu dieser Sacklochbohrung 46, in spitzem Winkel, ist im Befestigungskörper 36 eine zweite Gewindebohrung 48 ausgebildet, in welche eine zweite Madenschraube 50, insbesondere ein Gewindestift mit einem Innensechskant, eingesetzt ist.

Der Betätigungshebel 20 weist einen, den Durchlass 14 durchgreifenden Betätigungsstab 52 auf, der im Befestigungsabschnitt 47 eine in Umfangsrichtung verlaufende Nut 54 aufweist, die radial nach aussen offen ist. Der Betätigungsstab 52 ist in die Sacklochbohrung 46 eingeschoben und mittels der zweiten Madenschraube 50, die in die Nut 54 eingreift, im Befestigungskörper 36 festgeklemmt. Der Betätigungshebel 20 wird in einer Ausschaltstellung 56 (siehe Fig. 2) montiert und zwar kann in dieser Ausschaltstellung 56, beispielsweise mittels eines Werkzeugs, von ausserhalb der Kappe 12 durch den Durchlass 14 hindurchgegriffen werden, so dass die zweite Madenschraube 50 festgeklemmt werden kann.

Der Durchlass 14 weist, wie dies insbesondere der Fig. 1 entnehmbar ist, einen ersten Abschnitt 58 und einen zweiten Abschnitt 60 auf. Der erste Abschnitt 58 erstreckt sich von einem, der Ausschaltstellung 56 zugeordneten, unteren Ende 62 bis zu einer Stufe 64 und weist, in Umfangsrichtung der Kappe 12 gemessen, eine erste Breite B1 auf. Der, sich von der Stufe 64 bis zu einem, einer Maximalstellung 66 zugeordneten, oberen Ende 68 des Durchlasses 14 erstreckende, zweite Abschnitt 60 weist eine zweite Breite B2 auf, wobei die erste Breite B1 grösser ist als die zweite Breite B2. Die Stufe 64 dient dazu, die Schwenkbewegung des Betätigungshebels 20 zu begrenzen, sodass der Wasserdurchfluss auf beispielsweise 30-40% des maximalen Wasserdurchflusses, limitiert ist.

Die Kappe 12 weist einen, an den Mantelabschnitt 17 integral anschliessenden Deckel 70 auf, der rechtwinklig zur Drehachse 18 angeordnet ist, und sie ist mittels eines eingelassenen Befestigungsrahmens 72, der aus Kunststoff ausgebildet sein kann und fest mit dem inneren Bereich der Kappe 12 verbunden ist, beispielsweise verklebt, auf dem vorstehenden Abschnitt 32 des Armaturengehäuses 10 angeordnet. Ein, am Befestigungsrahmen 72 angeformter, bezüglich der Drehachse 18 radial nach innen vorstehender und in Umfangsrichtung verlaufender Wulst 74, greift dabei in eine, an dem vorstehenden Abschnitt 32 des Armaturengehäuses 16, in Umfangsrichtung verlaufende, radial nach aussen offen ausgebildete Nut 76 ein und hält so den Befestigungsrahmen 72 und somit die Kappe 14 auf dem Armaturengehäuse 16, um die Drehachse 18 drehbar fest. Der Befestigungsrahmen 72 ist so gewählt, dass zwischen demselben und dem vorstehenden Abschnitt 32 des Armaturengehäuses 16 ein Gleitlager ausgebildet ist, welches es erlaubt die Kappe 12 um die Drehachse 18 zu drehen. Der vorstehende Abschnitt 32 weist in einem oberen, freien Endbereich eine Verjüngung 78 auf, die das Aufbringen des Befestigungsrahmens 72 bzw. der Kappe 12 erleichtert.

Im Bereich des Durchlasses 14 weist die Kappe 12 eine innen liegende Dichtung 80 auf. Die Dichtung 80 weist einen Grundkörper 82 und vorstehende Lippen 84 auf, wobei beide Elemente aus elastischem Material, beispielsweise Gummi, ausgebildet sind. Der Grundkörper 82 weist einen, mit dem Durchlass 14 der Kappe 12 übereinstimmenden Durchlass auf und ist an der Kappe 12 befestigt. Die Lippen 84 sind auf der, dem Durchlass 14 zugewandten Seite des Grundkörpers 82 ausgebildet und erstrecken sich entlang dem Durchlass 14 der Kappe 12. Die Dichtung 80 dient dazu, den Durchlass 14 teilweise zu Verschliessen und hilft das Eindringen von Wasser und Schmutz zu verhindern.

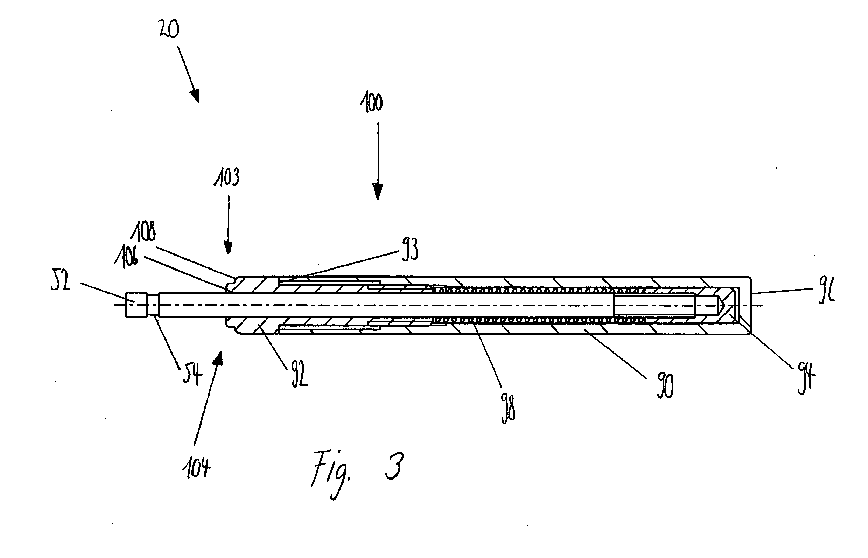

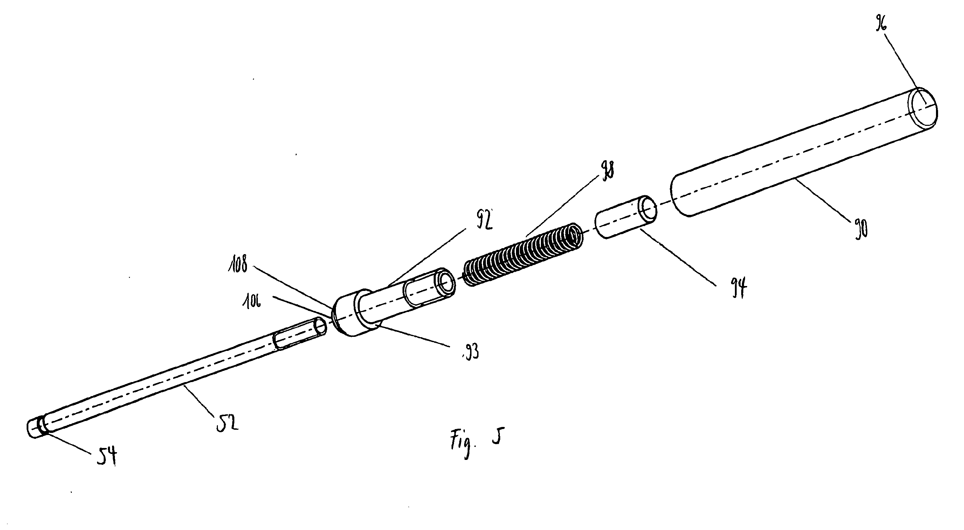

Wie aus den Figuren 3 bis 5 hervorgeht, ist auf dem Betätigungsstab 52, in Längsrichtung verschiebbar eine Betätigungshülse 88 aufgesetzt. Die Betätigungshülse 88 weist eine Endhülse 90 und ein Rohrelement 92 auf. Das Rohrelement 92 ist mittels einem Aussengewinde, welches auf dem, der Nut 54 abgewandten Ende des Rohrelements 92 ausgebildet ist, in die Endhülse 90, die, auf dem der Nut 54 zugewandten Ende, ein Innengewinde aufweist, bis zu einem Anschlag 93 eingeschraubt. Innerhalb der Endhülse 90, an dem der Nut 54 abgewandten Ende des Betätigungsstabes 52, ist eine Federhülse 94, mittels einem Innengewinde auf den Endbereich des Betätigungsstabes 52, der ein Aussengewinde aufweist, aufgeschraubt. Die Endhülse 90 ist, an dem der Nut 54 abgewandten Ende, mit einem Bodenabschnitt 96 geschlossen. Zwischen dem Betätigungsstab 52 und der Endhülse 90 ist eine Feder 98 angeordnet, die sich mit einem Ende an der Federhülse 94 und mit einem anderen Ende an dem Rohrelement 92 abstützt.

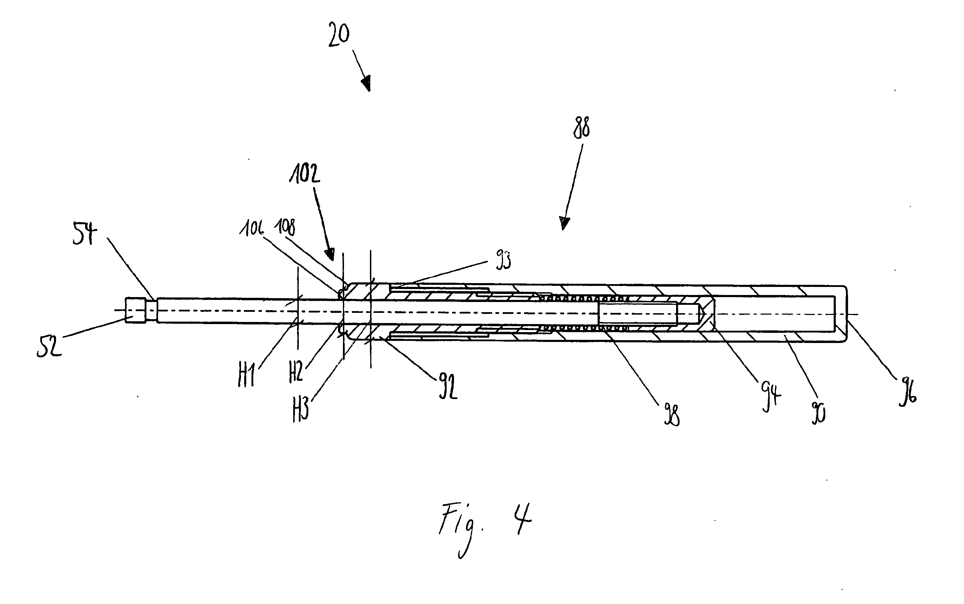

Aufgrund von diesem Aufbau, kann die Betätigungshülse 88 in die, in Fig. 3 und Fig. 4 gezeigten Endlagen bewegt werden. Fig. 3 zeigt den Betätigungshebel 20 in einer ersten Endlage 100, wobei die Betätigungshülse 88 mit einem, an der gegenüberliegenden Seite der Nut 54, anschliessenden Bodenabschnitt 96 an der Federhülse 94 nahezu ansteht. Fig. 4 zeigt den Betätigungshebel 20 in einer zweiten Endlage 102. Die Betätigungshülse 88 ist in Richtung von der Nut 54 weg zurückgeschoben und ein längerer Abschnitt des Betätigungsstabes 52 ist freigeben. Diese zweite Endlage 102 kann erreicht werden, indem eine äussere Kraft von der Nut 54 weg aufgebracht wird, beispielsweise durch eine, die Sanitärarmatur 10 benutzende Person. In der zweiten Endlage 102 wird der Betätigungshebel 20 montiert. Dabei kann der Befestigungsabschnitt 47 durch den Durchlass 14 hindurch in die Sacklochbohrung 46 des Befestigungskörpers 36 eingeschoben und anschliessend der Betätigungsstab 52 mittels der zweiten Madenschraube 50 festgeklemmt werden. Anschliessend kann die Feder 98 entspannt werden und ein, der Nut 54 zugewandter Abschnitt des Rohrelements 102 beginnt mit dem Durchlass 14 zusammenzuwirken.

Der Betätigungsstab 52 weist in einem mit dem Durchlass 14 zusammenzuwirken bestimmten Abschnitt 103, der sich an einem kappenseitigen Hülsenende 104 befindet, eine erste Hebelbreite H1 auf. Das Rohrelement 102 weist an seinem, der Nut 54 zugewandten Ende, eine Stirnseite 106 auf. Von dieser Stirnseite 106 bis zu einer Schulter 108 erstreckt sich ein zylindrischer Bereich mit einer zweiten Hebelbreite H2. Anschliessend an die Schulter 108 erstreckt sich ein weiterer zylindrischer Bereich mit einer, dem Aussendurchmesser der Betätigungshülse 88 entsprechenden, dritten Hebelbreite H3. Wobei die erste Hebelbreite H1 kleiner ist als die zweite Hebelbreite H2 und diese wiederum kleiner ist als die dritte Hebelbreite H3. Die Kanten der Stirnseite 106 und der Schulter 108, sind im Querschnitt abgerundet, um Beschädigungen an der Kappe 12 zu vermeiden.

Wie in Zusammenhang mit den Fig. 1 und Fig. 2 beschrieben, ist die erste Breite B1 grösser als die zweite Hebelbreite H2 aber kleiner als die dritte Hebelbreite H3 und die zweite Breite B2 grösser als die erste Hebelbreite H1 aber kleiner als die zweite Hebelbreite H2.

Die Figuren 1 und 2 sowie 6 bis 9 zeigen den Betätigungshebel 20 an der Sanitärarmatur 10 angeordnet. Befindet sich die Betätigungshülse 88 in einer Begrenzungsstellung 110, wie dies in den Fig. 1 und Fig. 2 sowie Fig. 6 und Fig. 7 gezeigt ist, so ist zwischen einer Sparstellung 112 und der Ausschaltstellung 56 frei wählbar. In dem mit dem Durchlass 14 zusammenzuwirken bestimmten Abschnitt 103 weist der Betätigungshebel 20 bzw. die Betätigungshülse 88 in der Begrenzungsstellung 110, die zweite Hebelbreite H2 auf. Dabei greift die Betätigungshülse 88 bzw. das Rohrelement 102 bis zur Schulter 108 in den ersten Abschnitt 58 des Durchlasses 14 ein und kann nur bis zu der Stufe 64 bewegt werden. Die Schulter 108 bzw. die dritte Hebelbreite H3 verhindert, dass der Betätigungshebel 20 zu tief in den Durchlass 14 eindringt.

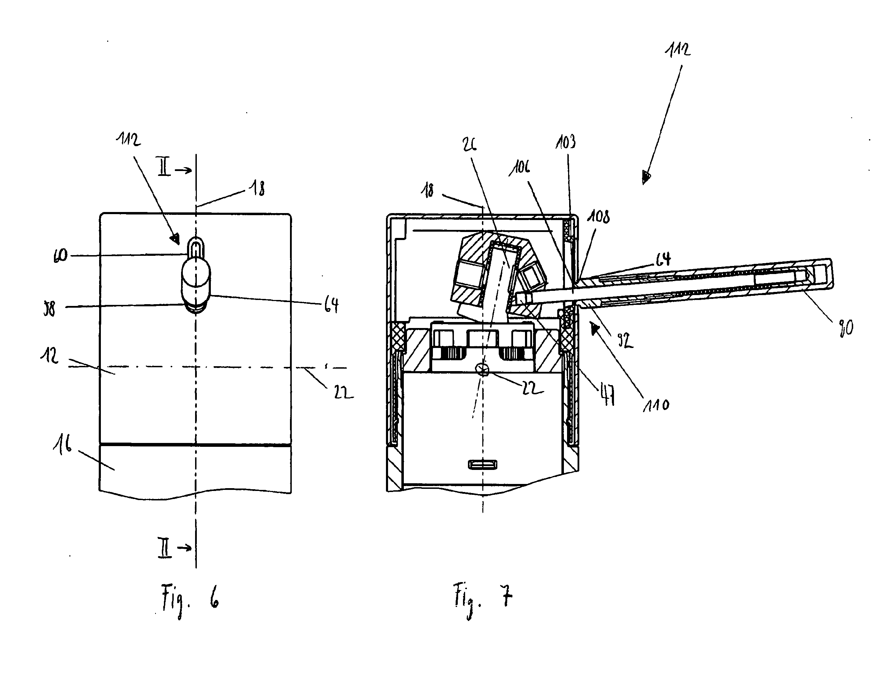

Fig. 6 und Fig. 7 zeigen den Betätigungshebel 20 in der Sparstellung 112 angeordnet, wobei sich die Betätigungshülse 88 in einer Begrenzungsstellung 110 befindet. In der Sparstellung 112 ist nur ein begrenzter Wasserdurchfluss, beispielsweise 30-40% des maximalen Wasserdurchflusses freigegeben. Dadurch wird verhindert, dass bei einer Benutzung der Sanitärarmatur 10 durch eine Person, von Beginn der Wasserabgabe weg, sofort der maximale Wasserdurchfluss freigegeben wird.

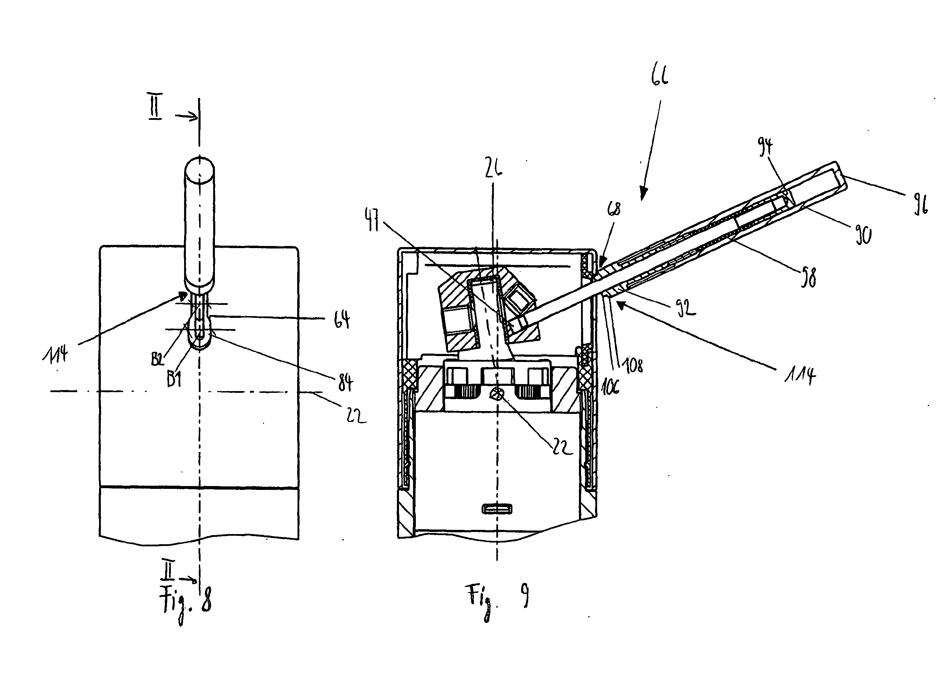

Fig. 8 und Fig. 9 zeigen den Betätigungshebel 20 in einer Maximalstellung 66 angeordnet. Um den Betätigungshebel 20 in die Maximalstellung 66 zu bewegen, wird die Betätigungshülse 88 durch eine Kraft, beispielsweise aufgebracht durch eine, die Sanitärarmatur benutzende Person, herausgezogen und in eine Freigabestellung 114 verbracht. In der Freigabestellung 114 greift, im mit dem Durchlass 14 zusammenzuwirken bestimmten Abschnitt 103, nur noch der Betätigungsstab 52 mit der ersten Hebelbreite H1 in den zweiten Abschnitt 60 des Durchlasses 14 ein. Die Stirnseite 106 bzw. die zweite Hebelbreite H2 verhindert dabei, dass die Betätigungshülse 88 in den Durchlass 14 eindringen kann. Der Betätigungshebel 20 kann dadurch über die Stufe 64 hinaus in die Maximalstellung 66 verschwenkt werden. Befindet sich die Betätigungshülse 88 in der Freigabestellung 114, so kann der Betätigungshebel 20 zwischen der Ausschaltstellung 56, der Sparstellung 112 und der Maximalstellung 66 frei wählbar geschwenkt werden.

Bei einem Verlassen der Maximalstellung 66 muss der Betätigungshebel 20 lediglich nach unten, in Richtung der Ausschaltstellung 56 gedrückt werden. Der Betätigungshebel 20 gleitet dabei über die Stufe 64 hinaus und eine Rückstellkraft der Feder 98 schiebt die Betätigungshülse 88 wieder zurück in die Begrenzungsstellung 110.

Die Sanitärarmatur 10 hat also die Funktion den Wasserdurchfluss mit Hilfe der Stufe 64 zu begrenzen und so den maximalen Wasserdurchfluss erst bei einer bewussten Manipulation, im vorliegenden Fall, durch Aufbringen einer axialen Zugkraft an der Betätigungshülse 88, freizugeben. Wird die Sanitärarmatur 10, ausgehend von der Ausschaltstellung 56, ohne das Aufbringen der Zugkraft bedient, so ist es nicht möglich, den Betätigungshebel 20 in die Maximalstellung 66 zu schwenken, der Schwenkbereich ist begrenzt durch die Sparstellung 112.

Mittels der Sanitärarmatur 10 ist es möglich Wasser einzusparen, sei dies im privaten oder öffentlichen Bereich.

Der Betätigungshebel 20 kann auch so ausgebildet sein, dass die Betätigungshülse 88 mittels einer Drehbewegung um ihre Längsachse in die Freigabestellung 112 bewegt und anschliessend der Betätigungshebel 20 in die Maximalstellung 66 geschwenkt werden kann. Um dies zu ermöglichen, kann der Betätigungshebel 20 bzw. die Betätigungshülse 88 nicht auf zwei sich gegenüberliegenden Seiten abgeflacht, rechtecksförmig ausgebildet sein. Dadurch weist der Betätigungshebel 20 zwei Breiten auf, wobei eine grösser ist als die andere. Bei einer möglichen Drehbewegung um die Längsachse des Betätigungshebels 20, kann somit die Breite, welche mit dem Durchlass 14 zusammenwirkt, durch die, die Sanitärarmatur 10 benutzende Person, gewählt werden. Statt einer beschriebenen Verengung mittels der Stirnseite 106 bzw. der Schulter 108 wird die Verengung durch zwei verschieden grosse Breiten des Betätigungshebels 20, die den Hebelbreiten H1 und H2 entsprechen, erzielt.

Es ist auch denkbar, den Betätigungshebel 20 bzw. die Betätigungshülse 88 mittels einer Druckkraft entlang der Längsachse des Betätigungshebels 20 in die Freigabestellung 114 zu verbringen. Dabei wäre die Betätigungshülse 88 innerhalb der Kappe 12 angeordnet, was einer kinematischen Umkehr entsprechen würde.

## Patentansprüche

1. Sanitärarmatur (10) mit einem Armaturengehäuse (16), einer in einer Ausnehmung (28) des Armaturengehäuses (16) angeordneten Kartusche (24) mit einem, zum Einstellen der Temperatur des Wassers, um eine Drehachse (18) der Kartusche (24) drehbaren und, zum Einstellen des Wasserdurchflusses, um eine rechtwinklig zur Drehachse (18) verlaufende Schwenkachse (20) zwischen einer Ausschaltstellung (56) und einer Maximalstellung (66) schwenkbaren Steuerarm (26), einem am Steuerarm (26) angeordneten Betätigungshebel (20) zum Drehen und Schwenken des Steuerarms (26), einer die Ausnehmung (28) und die Kartusche (24) überdeckenden Kappe (12), sowie Mittel, um die Schwenkbewegung des Betätigungshebels (20) und somit des Steuerarms (26), zwischen der Ausschaltstellung (56) und der Maximalstellung (66), in einer Sparstellung (112) zu begrenzen, wobei die kappe (12) ausschliesslich um die drehachse (18) drehbar am Armaturengehäuse (16) angeordnet ist sowie einen, vom Betätigunshebel (20) durchgriffenen, langlochartigen Durchlass (14) aufweist, **dadurch gekennzeichnet, dass** der langlochartige Durchlass (14) eine Stufe (64) aufweist, und der Betätigungshebel (20) aus einer Begrenzungsstellung (110) in eine Freigabestellung (112) bewegbar ist wobei die Schwenkbewegung des Betätigungshebels (20), in Richtung von der Ausschaltstellung (56) gegen die Maximalstellung (66), in Begrenzungsstellung (110) durch die Stufe (64) in der Sparstellung (112) begrenzt ist und in der Freigabestellung (114) ungehindert ist.

2. Sanitärarmatur (10) nach Anspruch 1, **dadurch gekennzeichnet, dass** oder Durchlass (14), in Umfangsrichtung der Kappe (12) gemessen, in einem sich vom der Ausschaltstellung (56) zugeordneten Ende bis zu der Stufe (64) erstreckenden ersten Abschnitt (58) eine erste, grössere Breite (B1) aufweist, als in einem sich von der Stufe (64) bis zum der Maximalstellung (66) zugeordneten anderen Ende erstreckenden zweiten Abschnitt (60).

3. Sanitärarmatur (10) nach Anspruch 2, **dadurch gekennzeichnet, dass** der Betätigungshebel (20), im Bereich der Durchlasses (14) und in der Umfangsrichtung gemessen, in Begrenzungsstellung (110) eine zweite Hebelbreite (H2), die kleiner als die erste Breite (B1) des Durchlasses (14) im ersten Abschnitt (58) und grösser als eine zweite Breite (B2) im zweiten Abschnitt (60) ist, und in Freigabestellung (114) eine erste Hebelbreite (H1) aufweist, die kleiner ist als die zweite Breite (B2) des Durchlasses (14) im zweiten Abschnitt (60).

4. Sanitärarmatur (10) nach Anspruch 3, **dadurch gekennzeichnet, dass** der Betätigungshebel (20) einen am Steuerarm (26) fest angeordneten Betätigungsstab (52) und eine auf diesem sitzende, in Längsrichtung des Betätigungsstabes (52) verschiebbare Betätigungshülse (88) aufweist, wobei die Betätigungshülse (88) in einem mit dem Durchlass (14) zusammenzuwirken bestimmten Abschnitt (103) einen der zweiten Hebelbreite (H2) entsprechenden Aussendurchmesser und der Betätigungsstab (52) wenigstens im Bereich des Durchlasses (14) einen der ersten Hebelbreite (H1) entsprechenden Durchmesser aufweist.

5. Sanitärarmatur (10) nach Anspruch 4, **dadurch gekennzeichnet, dass** zwischen dem Betätigungsstab (52) und der Betätigungshülse (88) eine Feder (98) wirkt, um diese mit einer in Richtung gegen den Durchlass (14) gerichteten Kraft zu beaufschlagen.

6. Sanitärarmatur (10) nach Anspruch 5, **dadurch gekennzeichnet, dass** der mit dem Durchlass (14) zusammenzuwirken bestimmte Abschnitt (103) der Betätigungshülse (88) sich beim kappenseitigen Hülsenende (104) befindet und die Betätigungshülse (88), anschliessend an diesen Abschnitt, einen Aussendurchmesser aufweist, welcher grösser ist als die erste Breite (B1) des Durchlasses (14) im ersten Abschnitt (58).

7. Sanitärarmatur (10) nach einem der Ansprüche 4 bis 6, **dadurch gekennzeichnet, dass** die in Längsrichtung des Betätigungshebels (20) gemessene Länge des mit dem Durchlass (14) zusammenzuwirken bestimmten Abschnitts (103) der Betätigungshülse (88) wenigstens annähernd der Dicke der Wand der Kappe (12) beim Durchlass (14) entspricht.

8. Sanitärarmatur (10) nach einem der Ansprüche 1 bis 7, **dadurch gekennzeichnet, dass** die Kappe (12) einen zur Drehachse (18) wenigstens annähernd koaxialen und wenigsten annähernd kreiszylinderförmigen Mantelabschnitt (17) aufweist, in welchem der Durchlass (14) angeordnet ist.

9. Sanitärarmatur (10) nach einem der Ansprüche 1 bis 8, **dadurch gekennzeichnet, dass** die Kappe (12) eine Dichtung (80) mit elastisch verformbaren Lippen (84) zum Verschliessen des Durchlasses (14) aufweist.

## Claims

1. A sanitary fitting (10) comprising a fitting housing (16), a cartridge (24) disposed in a recess (28) of the fitting housing (16) and having a control arm (26) which, for adjustment of the temperature of the water, is rotatable about a rotation axis (18) of the cartridge (24) and, for adjustment of the water flow, is pivotable, about a pivot axis (22) running at right angles to the rotation axis (18), between an off setting (56) and a maximum setting (66), an actuating lever (20), disposed on the control arm (26), for the rotation and pivoting of the control arm (26), a cap (12) covering the recess (28) and the cartridge (24), as well as means for limiting the pivot motion of the actuating lever (20), and thus of the control arm (26), between the off setting (56) and the maximum setting (66) in an economy setting (112), the cap (12) being arranged on the fitting housing (16) so as to be rotabable solely about the rotation axis (18) and the cap (12) comprising a long-hole like passage (14) through which the actuating lever (20) passes, wherein the long-hole like passage (14) comprises a step (64) and wherein the actuating lever (20) is movable from a limit setting (110) into a release setting (112), the pivot motion of the actuating lever (20), in the direction from the off setting (56) toward the maximum setting (66), in the limit setting (110) being limited by the step (64) in the economy setting (112) and being unhindered in the release setting (114).

2. The sanitary fitting (10) as claimed in claim 1, wherein the passage (14), measured in the peripheral direction of the cap (12), has in a first portion (58) extending from the end assigned to the off setting (56) up to the step (64) a first, larger width (B1) than in a second portion (60) extending from the step (64) up to the other end assigned to the maximum setting (66).

3. The sanitary fitting (10) as claimed in claim 2, wherein the actuating lever (20), in the region of the passage (14) and measured in the peripheral direction, has in the limit setting (110) a second lever width (H2) which is smaller than the first width (B1) of the passage (14) in the first portion (58) and larger than a second width (B2) in the second portion (60), and has in the release setting (114) a first lever width (H1) which is smaller than the second width (B2) of the passage (14) in the second portion (60).

4. The sanitary fitting (10) as claimed in claim 3, wherein the actuating lever (20) has an actuating rod (52), fixedly disposed on the control arm (26), and an actuating sleeve (88), sitting on said actuating rod and displaceable in the longitudinal direction of the actuating rod (52), the actuating sleeve (88), in a portion (103) intended to cooperate with the passage (14), having an outer diameter corresponding to the second lever width (H2), and the actuating rod (52), at least in the region of the passage (14), having a diameter corresponding to the first lever width (H1).

5. The sanitary fitting (10) as claimed in claim 4, wherein between the actuating rod (52) and the actuating sleeve (88) a spring (98) operates, in order to subject these to a force directed in the direction of the passage (14).

6. The sanitary fitting (10) as claimed in claim 5, wherein that portion (103) of the actuating sleeve (88) which is intended to cooperate with the passage (14) is located at the cap-side sleeve end (104), and the actuating sleeve (88), adjoining this portion, has an outer diameter which is larger than the first width (B1) of the passage (14) in the first portion (58).

7. The sanitary fitting (10) as claimed in one of claims 4 to 6, wherein the length of that portion (103) of the actuating sleeve (88) which is intended to cooperate with the passage (14), measured in the longitudinal direction of the actuating lever (20), corresponds at least approximately to the thickness of the wall of the cap (12) beside the passage (14).

8. The sanitary fitting (10) as claimed in one of claims 1 to 7, wherein the cap (12) has a casing portion (17), which is at least approximately coaxial to the rotation axis (18) and at least approximately circular-cylindrical and contains the passage (14).

9. The sanitary fitting (10) as claimed in one of claims 1 to 8, wherein the cap (12) has a seal (80) having elastically deformable lips (84) for closing off the passage (14).

## Revendications

1. Robinet sanitaire (10) comprenant un corps de robinet (16), une cartouche (24) disposée dans une cavité (28) du corps de robinet (16) avec un bras de commande (26) pouvant tourner pour l'ajustement de la température de l'eau autour d'un axe de rotation (18) de la cartouche (24) et pouvant pivoter pour l'ajustement du débit d'eau autour d'un axe de pivotement (20) s'étendant à angle droit par rapport à l'axe de rotation (18) entre une position de coupure (56) et une position de débit maximum (66), un levier d'actionnement (20) disposé sur le bras de commande (26), pour faire tourner et pivoter le bras de commande (26), un capuchon (12) recouvrant la cavité (28) et la cartouche (24), ainsi que des moyens pour limiter le mouvement de pivotement du levier d'actionnement (20) et donc du bras de commande (26) entre la position de coupure (56) et la position de débit maximum (66), dans une position d'économie (112), le capuchon (12) étant disposé sur le corps de robinet (16) de manière à pouvoir tourner exclusivement autour de l'axe de rotation (18) et présentant aussi un passage (14) de type trou oblong, traversé par le levier d'actionnement (20), **caractérisé en ce que** le passage (14) de type trou oblong présente un gradin (64), et le levier d'actionnement (20) peut être déplacé d'une position de limitation (110) dans une position de libération (114), le mouvement de pivotement du levier d'actionnement (20), dans la direction de la position de coupure (56) vers la position de débit maximum (66), étant limité dans la position de limitation (110) par le gradin (64) dans la position d'économie (112) et étant libéré dans la position de libération (114).

2. Robinet sanitaire (10) selon la revendication 1, **caractérisé en ce que** le passage (14), mesuré dans la direction périphérique du capuchon (12), dans une première portion (58) s'étendant depuis l'extrémité associée à la position de coupure (56) jusqu'au gradin (64), présente une première largeur plus importante (B1) que dans une deuxième portion (60) s'étendant depuis le gradin (64) jusqu'à l'autre extrémité associée à la position de débit maximum (66).

3. Robinet sanitaire (10) selon la revendication 2, **caractérisé en ce que** le levier d'actionnement (20), mesuré dans la région du passage (14) et dans la direction périphérique, présente dans la position de limitation (110) une deuxième largeur de levier (H2) qui est inférieure à la première largeur (B1) du passage (14) dans la première portion (58) et qui est supérieure à une deuxième largeur (B2) dans la deuxième portion (60), et présente dans la position de libération (114) une première largeur de levier (H1) qui est inférieure à la deuxième largeur (B2) du passage (14) dans la deuxième portion (60).

4. Robinet sanitaire (10) selon la revendication 3, **caractérisé en ce que** le levier d'actionnement (20) présente une barre d'actionnement (52) disposée fixement sur le bras de commande (26) et une douille d'actionnement (88) reposant sur celle-ci et déplaçable dans la direction longitudinale de la barre d'actionnement (52), la douille d'actionnement (88) présentant, dans une portion (103) prévue pour coopérer avec le passage (14), un diamètre extérieur correspondant à la deuxième largeur de levier (H2), et la barre d'actionnement (52) présentant, au moins dans la région du passage (14), un diamètre correspondant à la première largeur de levier (H1).

5. Robinet sanitaire (10) selon la revendication 4, **caractérisé en ce qu'**entre la barre d'actionnement (52) et la douille d'actionnement (88) agit un ressort (98), afin de solliciter celle-ci avec une force orientée dans la direction du passage (14).

6. Robinet sanitaire (10) selon la revendication 5, **caractérisé en ce que** la portion (103) de la douille d'actionnement (88) prévue pour coopérer avec le passage (14) se trouve au niveau de l'extrémité (104) de la douille du côté du capuchon, et la douille d'actionnement (88), présente, à la suite de cette portion, un diamètre extérieur qui est supérieur à la première largeur (B1) du passage (14) dans la première portion (58).

7. Robinet sanitaire (10) selon l'une quelconque des revendications 4 à 6, **caractérisé en ce que** la longueur de la portion (103) de la douille d'actionnement (88) prévue pour coopérer avec le passage (14), mesurée dans la direction longitudinale du levier d'actionnement (20), correspond au moins approximativement à l'épaisseur de la paroi du capuchon (12) au niveau du passage (14).

8. Robinet sanitaire (10) selon l'une quelconque des revendications 1 à 7, **caractérisé en ce que** le capuchon (12) présente une portion d'enveloppe (17) de forme au moins approximativement cylindrique circulaire et au moins approximativement coaxiale à l'axe de rotation (18), dans laquelle est disposé le passage (14).

9. Robinet sanitaire (10) selon l'une quelconque des revendications 1 à 8, **caractérisé en ce que** le capuchon (12) présente un joint d'étanchéité (80) avec des lèvres déformables élastiquement (84) pour fermer le passage (14).
